# EUROPÄISCHE PATENTSCHRIFT

(11) **EP 3 088 976 B1**
(45) Veröffentlichungstag und Bekanntmachung des Hinweises auf die Patenterteilung: **29.11.2017**
(21) Anmeldenummer: 15165501.6
(22) Anmeldetag: 28.04.2015
(51) Int. Cl.: G05B 19/05

(54) **VERFAHREN ZUM BETREIBEN EINER AUTOMATISIERUNGSEINRICHTUNG UND AUTOMATISIERUNGSEINRICHTUNG**
METHOD FOR OPERATING AN AUTOMATION DEVICE AND AUTOMATION DEVICE
PROCÉDÉ DE FONCTIONNEMENT D'UN DISPOSITIF D'AUTOMATISATION ET DISPOSITIF D'AUTOMATISATION

(43) Veröffentlichungstag der Anmeldung: 02.11.2016
(73) Patentinhaber: Siemens Aktiengesellschaft, 80333 München (DE)
(72) Erfinder: Lutz, Benjamin, Dr., 76327 Pfinztal (DE); Wolf, Gerrit, 76187 Karlsruhe (DE)

(56) Entgegenhaltungen:
- JP-A- H1 139 002
- US-A1- 2014 269 744
- Katalog St Pcs: "Prozessleitsystem SIMATIC PCS 7 Systemkomponenten Answers for industry", , 31. Dezember 2014 (2014-12-31), XP055207819, Gefunden im Internet: URL:https://www.automation.siemens.com/w2/ efiles/pcs7/pdf/00/stpcs7_201415_catalog_d e_Web.pdf [gefunden am 2015-08-14]

## Beschreibung

Die Erfindung betrifft ein Verfahren zum Betreiben einer Automatisierungseinrichtung, welche versehen ist mit einem Operator-System zur Visualisierung eines zu steuernden technischen Prozesses und ferner versehen ist mit mindestens einem Automatisierungsgerät, das derart ausgebildet ist, zur Prozesssteuerung in das mindestens eine Automatisierungsgerät geladene, mittels eines Continuous Function Chart-Editors erstellte CFC-Funktionen eines Steuerprogramms zu verarbeiten. Ferner betrifft die Erfindung eine Automatisierungseinrichtung gemäß dem Oberbegriff des Anspruchs 3.

Aus dem Siemens-Katalog "Prozessleitsystem SIMATIC PCS 7, Ausgabe 2014/15, Kapitel 4, ist bekannt, mittels eines auf einem Engineering-System ablauffähigen grafischen Editors in Form eines so genannten "Continuous Function Chart (CFC)-Editors", aus vorgefertigten Bausteinen (Objekten) nach Maßgabe einer zu lösenden Automatisierungsaufgabe eine Automatisierungslösung bzw. ein Anwender- oder Steuerprogramm für ein Automatisierungsgerät zu erstellen. Dazu wählt der Anwender die Bausteine bzw. Objekte, z. B. einen Regler- oder Zähler-Baustein aus einem verfügbaren Bausteinvorrat aus, platziert die Bausteine z. B. per Drag&Drop in einem Funktionsplan (z. B. CFC-Plan) und verschaltet diese per Mausklick miteinander. Unter dem Begriff "verschalten" wird verstanden, dass z. B. für die Kommunikation zwischen den Bausteinen Werte von einem Ausgang eines Bausteins zu einem oder mehreren Eingängen eines oder mehrerer Bausteine übertragen werden. Ferner wird darunter verstanden, dass ein oder mehrere Eingänge eines oder mehrerer Bausteine mit Prozesseingängen eines Prozessabbilds zur Übertragung von Istwerten verschaltet und/ oder dass ein oder mehrere Ausgänge eines oder mehrerer Bausteine mit Prozessausgängen des Prozessabbilds zur Übertragung von Sollwerten verschaltet sind. Nachdem der Anwender alle Funktionen im Funktionsplan erstellt hat, erzeugt das Engineering-System mittels des Automatisierungsgeräts lesbare CFC-Automatisierungsobjekte bzw. CFC-Funktionen, die in dieses Automatisierungsgerät geladen und dort im Rahmen der Steuerung eines technischen Prozesses bzw. zur Lösung der Automatisierungsaufgabe verarbeitet werden.

Aufgrund der Komplexität der zu steuernden Anlage oder des zu steuernden technischen Prozesses sind gewöhnlich mehrere tausend CFC-Pläne zu erstellen und die daraus übersetzten Funktionen in eine Vielzahl von Automatisierungsgeräten zu laden. Dort verarbeiten die Automatisierungsgeräte während Verarbeitungszyklen die Funktionen, wobei es vorkommen kann, dass ein Automatisierungsgerät die Funktionen während eines derartigen Zyklus nicht verarbeiten kann, was eine Echtzeitverletzung bedeutet. Die zulässige Verarbeitungszeit wird z. B. deshalb überschritten, weil die Laufzeiten der Funktion in Abhängigkeit vom Prozessabbild stark schwanken können und darüber hinaus diese Funktions-Laufzeiten aufgrund des Betriebszustands des Automatisierungsgeräts und/oder der zu steuernden Anlage - z. B. ein Betriebszustand "Hochfahren", "Normalbetrieb" oder "Störung" - beeinträchtigt wird. Je höher der "Füllstand" eines Automatisierungsgeräts, d. h. je größer die Anzahl der zu verarbeitenden Funktionen ist, desto größer ist die Gefahr, dass die Zeit zur Abarbeitung der Funktionen größer ist als die dafür zulässige Zykluszeit des Automatisierungsgeräts. In diesem Fall kann eine störungsfreie Automatisierung der Anlage nicht mehr gewährleistet werden.

Um eine störungsfreie Automatisierung weitgehend gewährleisten zu können, werden die Automatisierungskomponenten geeignet ausgelegt. Die Auslegung der Automatisierungskomponenten erfolgt aufgrund verschiedener Annahmen und Abschätzungen des zu steuernden Prozesses bzw. der zu steuernden Anlage, wobei beispielsweise die Anzahl der Prozessobjekte, die es zu automatisieren gilt, abgeschätzt wird. Erst im Rahmen des Engineerings und des "Factory Acceptance Test (FAT)" kann die Mindestleistung der Automatisierungseinrichtung, insbesondere die Mindestleistung des Automatisierungsgeräts der Automatisierungseinrichtung, bestimmt werden. Zusätzlich werden hier noch Reservekapazitäten einkalkuliert, die jedoch im Lebenszyklus einer Anlage "schmelzen" können, weil z. B. eine oder mehrere Erweiterungen der Anlage erforderlich sind. Zwar kann man im Rahmen des "Factory Acceptance Test die Automatisierung simulieren, um die Grenzen der Automatisierung zu bestimmen, ein störungsfreier Betrieb der realen Anlage kann dadurch jedoch nicht gewährleistet werden, zumal es schwierig ist, im Rahmen einer Simulation ein "Worst-Case-Szenario" herbeizuführen.

Um eine störungsfreie Automatisierung weitgehend gewährleisten zu können, kann auch eine aus Kapitel 8 des genannten Siemens-Katalogs bekannte redundante, aus mindestens zwei Teilsystemen bestehende Automatisierungseinrichtung eingesetzt werden, welche dazu vorgesehen ist, die Verfügbarkeit einer zu steuernden Anlage zu erhöhen. Dazu ist die Automatisierungseinrichtung mit Mitteln versehen, welche aufgrund eines Ereignisses zunächst entscheiden, welches Programm gestartet werden muss, um geeignet auf das Ereignis zu reagieren. Für den Fall, dass beispielsweise während der Ausführung eines Programms ein Ereignis in Form eines anstehenden Alarms des zu steuernden technischen Prozesses an einem Meldeeingang des Automatisierungssystems anliegt, wird das laufende Programm an einem Wartepunkt angehalten und ein Programm gestartet, das zur Analyse des Alarms und zum Einleiten von Maßnahmen vorgesehen ist, welche die Ursache des Alarms beheben. Die Teilsysteme dieser Automatisierungseinrichtung werden regelmäßig synchronisiert und es kann daher weitgehend sichergestellt werden, dass der Ausfall eines dieser Teilsysteme sich nicht störend auf einen zu steuernden Prozess auswirkt, weil das andere Teilsystem die Ausführung bzw. die Bearbeitung des entsprechenden Teils ihres jeweiligen Steuerprogramms oder die Ausführung bzw. die Bearbeitung der entsprechenden Teile dieses Steuerprogramms fortsetzen kann. Eine derart redundant ausgebildete Automatisierungseinrichtung erhöht zwar die Verfügbarkeit der zu steuernden Anlage, erfordert allerdings insbesondere einen Mehraufwand an Hardware.

US 2014/0269744 A1 offenbart ein verteiltes Steuersystem, welches über Steuer-Gateways mit Feldgeräten verbunden ist, wobei bei Überlast eines Steuer-Gateways (FVCG, field versatile control gateway) Steuerfunktionen des FVCG auf das verteilte Steuersystem (DCS, distributed control system) verlagert werden. Der Erfindung liegt daher die Aufgabe zugrunde, ein Verfahren der eingangs genannten Art anzugeben, mittels welchem die Belastung des Automatisierungsgeräts vermindert werden kann. Darüber hinaus ist eine Automatisierungseinrichtung gemäß dem Oberbegriff des Anspruchs 2 zu schaffen, welche zur Durchführung des Verfahrens geeignet ist.

Diese Aufgabe wird im Hinblick auf das Verfahren durch die im kennzeichenenden Teil des Anspruchs 1 angegebenen, bezüglich der Automatisierungseinrichtung durch die im kennzeichnenden Teil des Anspruchs 2 angegebenen Maßnahmen gelöst.

Vorteilhaft ist, dass ohne eine Erweiterung oder eine Änderung der Hardware, z. B. in der Art und Weise, dass die Automatisierungseinrichtung mit einem weiteren Automatisierungsgerät versehen wird oder dass das vorhandene Automatisierungsgerät durch ein leistungsstärkeres Automatisierungsgerät ersetzt wird, die Verfügbarkeit der Automatisierungseinrichtung verbessert wird. Ein ohnehin zur Visualisierung des zu steuernden technischen Prozesses vorgesehenes Operator-System, beispielsweise ein aus Kapitel 5 des genannten Siemens-Katalogs bekanntes Operator-System, wird im Falle einer drohenden Überbelastung des Automatisierungsgeräts zur Verarbeitung von CFC-Funktionen des Steuerprogramms eingesetzt, wobei eine dynamische und partielle Entlastung des Automatisierungsgeräts ermöglicht wird. Dadurch wird die Verfügbarkeit der Automatisierungseinrichtung kostengünstig erhöht und ferner werden dadurch Produktionsausfälle oder Anlagenstillstände weitgehend vermieden.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen in einer vereinfachten Darstellung
- Figuren 1 und 2: Bestandteile einer Automatisierungseinrich-tung und
- Figur 3: CFC-Pläne.

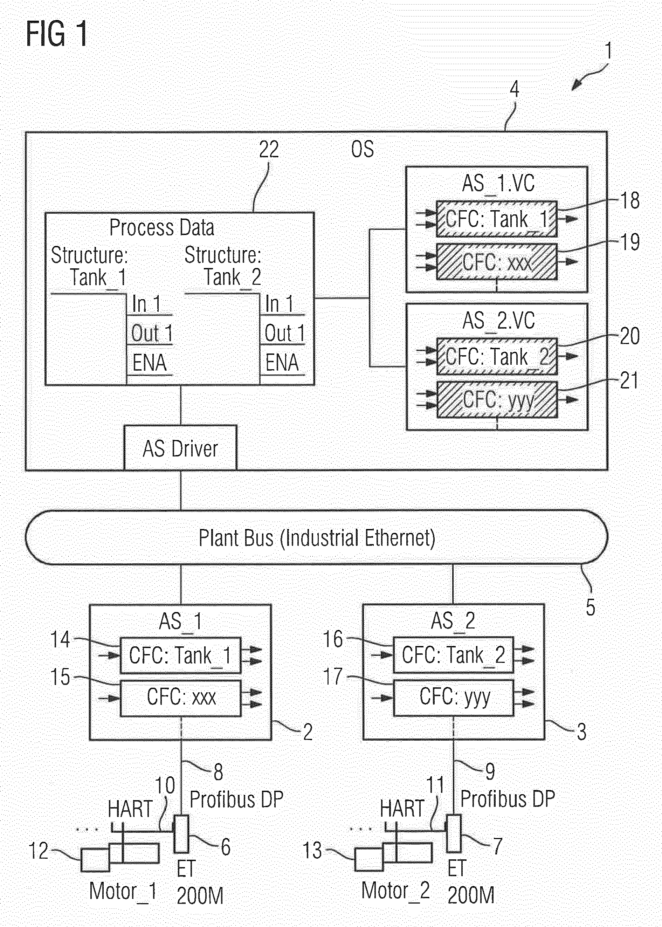

Die in den Figuren 1 bis 3 dargestellten gleichen Teile sind mit gleichen Bezugszeichen versehen.

In Figur 1 ist mit 1 eine Automatisierungseinrichtung bezeichnet, die im vorliegenden Ausführungsbeispiel Automatisierungsgeräte 2, 3 und ein Operator-System umfasst, das aus einem OS-Server 4 und einem hier nicht dargestellten OS-Client besteht. Der OS-Server 4 kommuniziert über eine Busverbindung 5 mit den Automatisierungsgeräten 2, 3, wobei ferner der OS-Server 4 und der OS-Client über einen weiteren hier nicht dargestellten Bus Informationen austauschen. Die Automatisierungseinrichtung 1 weist ferner dezentrale Peripherien 6, 7 auf, wobei die dezentrale Peripherie 6 über einen Bus 8 an das Automatisierungsgerät 2 und die dezentrale Peripherie 7 über einen Bus 9 an das Automatisierungsgerät 3 angeschlossen ist. Über weitere Busverbindungen 10, 11 greifen die jeweiligen dezentralen Peripherien 6, 7 lesend und/ oder schreibend auf eine Vielzahl von Feldgeräten 12, 13 (Sensoren, Aktoren) zu.

Mittels eines auf einem hier nicht dargestellten Engineering-System ablauffähigen Continuous Function Chart (CFC)-Editors erstellt ein Anwender in gewohnter Art und Weise aus vorgefertigten Bausteinen nach Maßgabe einer zu lösenden Automatisierungsaufgabe grafisch ein oder mehrere Steuer- bzw. Anwenderprogramme oder Teile dieses Programms oder der Programme für die Automatisierungsgeräte 2, 3. Dazu wählt der Anwender die Bausteine, z. B. einen Regler- oder Zähler-Baustein, aus einem verfügbaren Bausteinvorrat aus, platziert die Bausteine z. B. per Drag&Drop in einem Funktionsplan (z. B. CFC-Plan) und verschaltet diese per Mausklick miteinander. Nachdem der Anwender alle Funktionen im Funktionsplan erstellt hat, erzeugt das Engineering-System mittels der Automatisierungsgeräte 2, 3 lesbare CFC-Funktionen, die in diese Automatisierungsgeräte 2, 3 geladen und dort im Rahmen der Steuerung eines technischen Prozesses bzw. zur Lösung der Automatisierungsaufgabe verarbeitet werden. Die in die Automatisierungsgeräte 2, 3 geladenen und dort während der Prozesssteuerung zu verarbeitenden CFC-Funkionen sind im vorliegenden Ausführungsbeispiel mit 14, 15, 16, 17 bezeichnet, wobei diesen CFC-Funktionen 14 bis 17 entsprechende CFC-Funkionen 18, 19, 20, 21 in den OS-Server 4 geladen werden. Die CFC-Funktionen 18 bis 21 repräsentieren Kopien der CFC-Funktionen 14 bis 17, wobei selbstverständlich nicht alle in die Automatisierungsgeräte 2, 3 geladenen CFC-Funktionen 14 bis 17 auch in den OS-Server 4 geladen werden müssen. Es reicht aus, nur die für eine spätere Entlastung vorgesehenen CFC-Funktionen, vorzugsweise echtzeitunkritische CFC-Funktionen, in den OS-Server zu laden. Welche der CFC-Funktionen in den OS-Server 4 zu laden sind, gibt der Anwender während des Engineerings vor.

Im vorliegenden Ausführungsbeispiel gemäß Figur 1 verarbeitet während eines RUN-Betriebs bzw. während der Prozesssteuerung das Automatisierungsgerät 2 die CFC-Funktionen 14, 15 und das Automatisierungsgerät 3 die CFC-Funktionen 16, 17. Die in den OS-Server 5 geladenen CFC-Funktionen 18 bis 21 sind deaktiviert, was in der Zeichnung mittels einer Schraffur dargestellt ist. Während dieser Verarbeitung aktualisieren die Automatisierungsgeräte 2, 3 ein in diesen Automatisierungsgeräten 2, 3 hinterlegtes Prozessabbild (nicht dargestellt) und ein im OS-Server 4 hinterlegtes Prozessabbild 22 mit aktuellen Prozesseingangswerten (Istwerten) und Prozessausgangswerten (Sollwerten), wobei das im OS-Server 5 gespeicherte Prozessabbild 22 das in den Automatisierungsgeräten 2, 3 hinterlegte gespiegelte Prozessabbild repräsentiert.

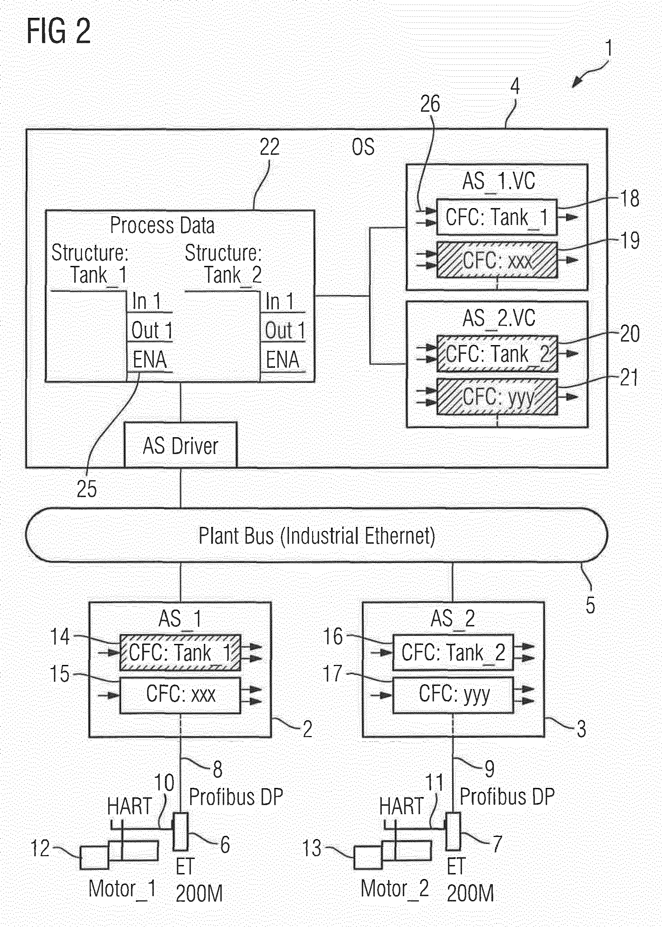

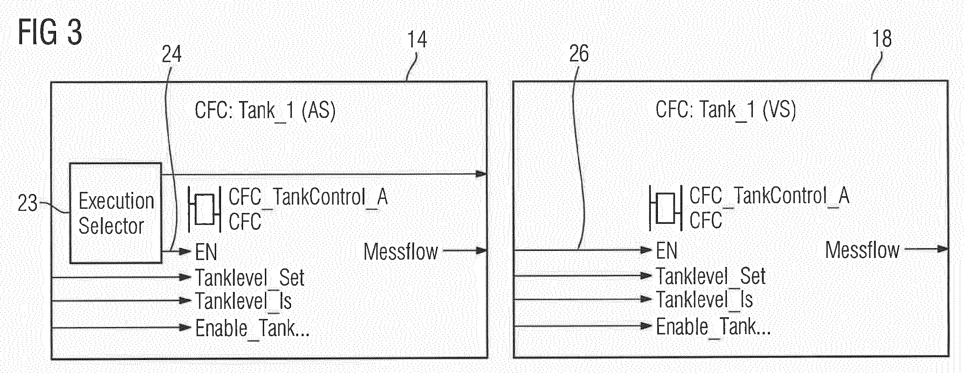

Die Automatisierungsgeräte 2, 3 erfassen während des RUN-Betriebs ihre jeweilige Verarbeitungs-Belastung, z. B. indem die Automatisierungsgeräte 2, 3 ihre jeweiligen Verarbeitungs-Zykluszeiten beobachten. Für den Fall, dass beispielsweise das Automatisierungsgerät 2 eine drohende Überlastung erkennt, deaktiviert ein Selektor 23 (Figur 3) des Automatisierungsgeräts 2 die CFC-Funktion 14 (schraffiert dargestellt) im Automatisierungsgerät 2 und aktiviert die dieser CFC-Funktion 14 entsprechende CFC-Funktion 18 im OS-Server 4 (Figur 2). Die Deaktivierung der CFC-Funktion 14 im Automatisierungsgerät 2 wird dadurch bewerkstelligt, indem der Selektor 23 einem Eingang 24 der CFC-Funktion 14 ein Sperrsignal aufschaltet, die Aktivierung der CFC-Funktion 18 im OS-Server 4 erfolgt dadurch, dass der Selektor 23 in das Prozessabbild 22 einen Prozesswert 25 zunächst einschreibt. Während einer Prozessabbild-Akutalisierung liest der OS-Server diesen "speziellen" Prozesswert aus und erzeugt aufgrund dieses speziellen Prozesswertes ein Freischaltsignal, welches der OS-Server 4 einem Eingang 26 der CFC-Funktion 18 zuführt, wodurch diese CFC-Funktion 18 aktiviert ist. Die CFC-Funktion 18 des Steuerprogramms verarbeitet nun der OS-Server 4, wodurch das Automatisierungsgerät 2 entlastet wird. Selbstverständlich kann diese beschriebene Aktivierung bzw. Deaktivierung wieder rückgängig gemacht werden.

Die Deaktivierung der CFC-Funktion 14 im Automatisierungsgerät 2 und die Aktivierung der CFC-Funktion 18 im OS-Server 4 wird rückgängig gemacht, indem der Selektor 23 ein Freigabesignal auf den Eingang 23 der CFC-Funktion schaltet und den Prozesswert im Prozessabbild 22 löscht.

Im vorliegenden Ausführungsbeispiel ist der Selektor 23 zur Aktivierung und Deaktivierung der CFC-Funktionen 14, 18 in einen "CFC-Rahmen" integriert, welcher die CFC-Funktion 14 umfasst. Selbstverständlich können die Automatisierungsgeräte 2, 3 jeweils einen Selektor aufweisen, welcher zur Aktivierung und Deaktivierung von mehreren CFC-Funktionen im jeweiligen Automatisierungsgerät 2, 3 vorgesehen ist.

## Patentansprüche

1. Verfahren zum Betreiben einer Automatisierungseinrichtung (1), welche versehen ist mit
- einem Operator-System (4) zur Visualisierung eines zu steuernden technischen Prozesses, und
- mindestens einem Automatisierungsgerät (2, 3), das derart ausgebildet ist, zur Prozesssteuerung in das mindestens eine Automatisierungsgerät (2, 3) geladene, mittels eines Continuous Function Chart-Editors erstellte CFC-Funktionen (14 bis 17) eines Steuerprogramms zu verarbeiten,
**dadurch gekennzeichnet, dass**
- die Verarbeitungs-Belastung des mindestens einen Automatisierungsgeräts (2, 3) erfasst wird,
- in das Operator-System (4) CFC-Funktionen (18 bis 21) geladen werden, welche den in das mindestens eine Automatisierungsgerät (2, 3) geladenen CFC-Funktionen (14 bis 17) des Steuerprogramms entsprechen,
- mittels mindestens eines Selektors (23) des mindestens einen Automatisierungsgeräts (2, 3) in Abhängigkeit der Verarbeitungs-Belastung entweder mindestens eine der CFC-Funktionen (14) in dem mindestens einen Automatisierungsgerät (2) oder eine dieser mindestens einen CFC-Funktion (14) entsprechenden CFC-Funktion (18) im Operator-System (4) aktiviert und verarbeitet wird,
- mittels des Selektors (23) ein Prozesswert einem Prozessabbild (22) des Operator-Systems (4) zum Aktivieren der einen CFC-Funktion (18) im Operator-System übermittelt wird, wobei während einer Prozessabbild-Aktualisierung die CFC-Funktion (18) aktiviert wird.

2. Automatisierungseinrichtung mit
- einem Operator-System (4) zur Visualisierung eines zu steuernden technischen Prozesses,
- mindestens einem Automatisierungsgerät (2, 3), das derart ausgebildet ist, zur Prozesssteuerung in das mindestens eine Automatisierungsgerät (2, 3) geladene, mittels eines Continuous Function Chart-Editors erstellte CFC-Funktionen (14 bis 17) eines Steuerprogramms zu verarbeiten, **dadurch gekennzeichnet, dass**
- das mindestens eine Automatisierungsgerät (2, 3) seine Verarbeitungs-Belastung erfasst,
- das Operator-System (4) dazu ausgebildet ist, in das Operator-System (4) geladene CFC-Funktionen (18 bis 21), die den in das mindestens eine Automatisierungsgerät (2, 3) geladenen CFC-Funktionen (14 bis 17) des Steuerprogramms entsprechen, zu verarbeiten,
- das mindestens eine Automatisierungsgerät (2, 3) für mindestens eine der CFC-Funktionen (14) in dem mindestens einen Automatisierungsgerät (2) einen Selektor (23) aufweist, der dazu ausgebildet ist, in Abhängigkeit der Verarbeitungs-Belastung entweder diese eine CFC-Funktion (14) in dem mindestens einen Automatisierungsgerät (2) oder die dieser einen CFC-Funktion (14) entsprechenden CFC-Funktion (18) im Operator-System (4) zu aktivieren,
- der Selektor (23) einen Prozesswert einem Prozessabbild (22) des Operator-Systems (4) zum Aktivieren der einen CFC-Funktion (18) im Operator-System (4) übermittelt, wobei während einer Prozessabbild-Aktualisierung die CFC-Funktion (18) aktiviert wird.

## Claims

1. Method for operating automation equipment (1), which is provided with
- an operator system (4) for displaying a technical process to be controlled, and
- at least one automation device (2, 3), which is designed to process, for process control, CFC functions (14 to 17) of a control program which are loaded onto the at least one automation device (2, 3) and are created by means of a Continuous Function Chart editor,
**characterised in that**
- the processing load of the at least one automation device (2, 3) is captured,
- CFC functions (18 to 21) are loaded onto the operator system (4) and correspond to the CFC functions (14 to 17) of the control program which are loaded onto the at least one automation device (2, 3),
- by means of at least one selector (23) of the at least one automation device (2, 3) as a function of the processing load either at least one of the CFC functions (14) in the at least one automation device (2) or a CFC function (18) in the operator system (4) corresponding to said at least one CFC function (14) is activated and processed,
- by means of the selector (23) a process value is transmitted to a process image (22) of the operator system (4) to activate the one CFC function (18) in the operator system, wherein the CFC function (18) is activated during a process image update.

2. Automation device having
- an operator system (4) for displaying a technical process to be controlled,
- at least one automation device (2, 3), which is designed to process, for process control, CFC functions (14 to 17) of a control program which are loaded onto the at least one automation device (2, 3) and are created by means of a Continuous Function Chart editor,

## Revendications

1. Procédé pour faire fonctionner un dispositif d'automatisation (1), qui comporte
- un système (4) opérateur pour visualiser un processus technique à commander, et
- au moins un appareil (2, 3) d'automatisation, qui est configuré pour traiter, pour la commande de processus, des fonctions CFC (14 à 17) d'un programme de commande qui sont chargées dans le au moins un appareil (2, 3) d'automatisation et sont créées au moyen d'un éditeur de graphe de fonction continue,
**caractérisé en ce que**
- la charge de traitement du au moins un appareil (2, 3) d'automatisation est détecté,
- des fonctions CFC (18 à 21) sont chargées dans le système (4) opérateur, ces fonctions correspondant aux fonctions CFC (14 à 17) du programme de commande chargées dans le au moins un appareil (2, 3) d'automatisation,
- soit au moins l'une des fonctions CFC (14) dans le au moins appareil (2) d'automatisation, soit une fonction CFC (18) correspondant à cette au moins une fonction CFC (14) étant traitée et activée dans le système (4) opérateur au moyen d'au moins un sélecteur (23) du au moins un appareil (2, 3) d'automatisation en fonction de la charge de traitement,
- au moyen du sélecteur (23), une valeur de traitement d'une image (22) de traitement du système (4) opérateur est transmise dans le système opérateur pour l'activation de la une fonction CFC (18), la fonction CFC (18) étant activée pendant une actualisation de l'image de processus.

2. Dispositif d'automatisation comportant
- un système (4) opérateur pour la visualisation d'un processus technique à commander,
- au moins un appareil (2, 3) d'automatisation qui est configuré, pour la commande de processus, pour traiter des fonctions CFC (14 à 17) d'un programme de commande qui sont chargées dans le au moins un appareil (2, 3) d'automatisation et sont créées au moyen d'un éditeur de graphe de fonction continue,
**caractérisé en ce que**
- le au moins un appareil (2, 3) d'automatisation détecte sa charge de traitement,
- le système (4) opérateur est configuré de sorte que des fonctions CFC (18 à 21) chargées dans le système (4) opérateur, qui correspondent aux fonctions CFC (14 à 17) du programme de commande chargées dans le au moins un appareil (2, 3) d'automatisation, sont traitées,
- le au moins un appareil (2, 3) d'automatisation comporte un sélecteur (23) pour au moins l'une des fonctions CFC (14) dans le au moins un appareil (2) d'automatisation, qui est configuré de sorte, en fonction de la charge de traitement, à activer soit cette fonction CFC (14) dans le au moins appareil (2) d'automatisation, soit une fonction CFC (18) correspondant à cette fonction CFC (14) dans le système (4) opérateur,
- le sélecteur (23) transmet une valeur de traitement d'une image (22) de traitement du système (4) opérateur pour l'activation de la fonction CFC (18) dans le système (4) opérateur, la fonction CFC (18) étant activée pendant une actualisation de l'image de processus.
